# EUROPÄISCHE PATENTSCHRIFT

(11) **EP 1 402 986 B1**
(45) Veröffentlichungstag und Bekanntmachung des Hinweises auf die Patenterteilung: **09.02.2005**
(21) Anmeldenummer: 03019958.2
(22) Anmeldetag: 03.09.2003
(51) Int. Cl.: B23K 26/08, B21D 28/10

(54) **Verfahren und Vorrichtung zum Ausschneiden von Blechzuschnitten**
Method and apparatus for cutting out of sheet blanks
Procédé et dispositif de découpage de pièces découpées

(30) Priorität: 28.09.2002 DE 10245371
(43) Veröffentlichungstag der Anmeldung: 31.03.2004
(73) Patentinhaber: Trumpf Sachsen GmbH, 01902 Neukirch (DE)
(72) Erfinder: Harnisch, Gunter, 01936 Königsbrück (DE); Herrmann, Rolf, 02689 Sohland (DE); Hultsch, Andreas, 01904 Neukirch (DE); Thonig, Harry, Dr., 01904 Neukirch (DE)

(56) Entgegenhaltungen:
- DE-A- 4 020 839
- DE-A- 10 037 198
- DE-U- 20 105 804

## Beschreibung

Die Erfindung betrifft ein Verfahren und eine Vorrichtung zum Ausschneiden von Blechzuschnitten gemäß dem Obergriff der Ansprüche 1 bzw. 8.

Aus der DE 28 35 476 B 1 ist eine Vorrichtung zum Zuführen von Blechband von einem Coil zu einer Verarbeitungsmaschine wie Stanzen oder Pressen bekannt, bei der eine Haspel den Coil aufnimmt, der Vorschubwalzen und Richtwalzen für das abzuwickelnde Blech folgen. Das Blech wird schrittweise abgewickelt und sein Vorschub mittels einer auf das Blechband wirkende Andrückwelle und eine gegen die Wickelrichtung wirkende Haspelbremse gesteuert. In Anlehnung daran wird das Zerteilen eines von einem Coil abgewickelten Blechbandes in aufstapelbare und einem Presswerk zugeführte Platinen in DE 40 20 839 A 1 beschrieben. Da hier das Blechband in Pressen eingelegt wird, scheint eine besonders sorgsame Behandlung der Blechoberfläche nicht notwendig zu sein.

Zum Schneiden von Blechzuschnitten aus von als Coil gewickelten Blech mittels Laser ist aus der DE 201 05 804 U 1 bekannt, den Coil kontinuierlich abzuwickeln, das Blechband zu richten und das gerade gerichtete Blech unter einer Brücke zu führen, wobei an der Brücke ein Fokussierkopf quer zur Bewegungsrichtung des geführt wird. Um für das Blech eine Rückwärtsbewegung zu ermöglichen, damit komplizierte Flächen geschnitten werden können, ist ein Zwischenspeicher vorgesehen, in den das Blech durchhängen kann, wenn es auf der Arbeitsfläche zurück bewegt wird. Die Rückwärtsbewegung ist von der Kapazität des Zwischenspeichers begrenzt. Bei einem ständigen Bewegungsrichtungswechsel des Blechbandes auf der Arbeitsfläche sind Kratzer auf der Oberfläche des Bleches unvermeidlich. Weiterhin besteht die Gefahr, dass angeschnitene Teile bei der Rückwärtsbewegung in die Längsöffnung eintauchen und sich dabei verbiegen oder verklemmen. Im Stand der Technik der DE 201 05 804 U1 wird ohne Angabe der Fundstelle bereits beschrieben, dass es bekannt ist, das Blech von einem Coil schrittweise abzuwickeln oder in Platten auf einen Bearbeitungstisch aufzulegen. Bei einem feststehenden Kopf wird das Blech am Rand von Zähnen erfasst und unter dem Kopf mittels Gelenkarmen geführt. Anderenfalls wird der Fokussierkopf in zwei Achsrichtungen uber dem schrittweise vorgeschobenen und auf dem Blechbearbeitungstisch aufliegen den Blech bewegt. Hier wird bemängelt, dass nicht größere, den Bearbeitungstisch überragende Teile geschnitten werden können, dass Schnittteile verloren gehen können und dass ein erheblicher Aufwand zur Erfassung des giftigen Rauches nötig ist.

Ziel und Aufgabe der Erfindung ist es, ein Verfahren und eine Vorrichtung zum Ausschneiden von Blechzuschnitten vorzugsweise aus auf Coil gewickelten Dünnblech zu finden, bei dem das Blech schrittweise vorgeschoben wird, ohne dass Schnittteile verklemmen, zerkratzen oder verloren gehen.

Erfindungsgemäß wird diese Aufgabe durch die Merkmale der Patentansprüche 1 bzw. 8 gelöst. Weitere vorteilhafte Ausführungen der Erfindung sind Gegenstand der Unteransprüche.

Bei dem Verfahren zum Ausschneiden von Blechzuschnitten aus von auf ein Coil gewickeltes Dünnblech oder aus auf eine Arbeitsfläche gelegte Blechtafeln wird in einem ersten Arbeitsgang das Blech über der Arbeitsfläche von einem seitlich zum Blechband angeordneten Spannrahmen erfasst und gespannt in einer Schneidposition gehalten. Dort werden die Blechzuschnitte soweit ausgeschnitten, dass nur schmale Stege, die nach Möglichkeiten bezüglich der Maßhaltigkeit des jeweiligen Zuschnittes an unkritische Stellen gelegt sind, die Blechzuschnitte im Blech halten. Das so vorgeschnittene Blech wird weiterhin eingespannt bleibend in eine neben der Schneidposition befindliche Ablageposition über eine Ablagefläche verfahren. Dort werden in einem zweiten Arbeitsgang die Stege zerschnitten, so dass die Blechzuschnitte hier aus dem Restblech fallen und auf der Ablagefläche abgelegt werden. Bei den sich wiederholenden Arbeitsgängen werden an gleicher Stelle die gleichen Blechzuschnitte ausgeschnitten und diese auf der Ablagefläche aufeinander gestapelt. Dabei senkt sich die Ablagefläche entsprechend der Blechstärke ab. Das verbleibende Restblech wird weiter aus der Vorrichtung heraus befördert und entsorgt.

Zum Einlegen des Anfangs des abzuwickelnden Dünnblechbandes wird der Spannrahmen in die Schneidposition gefahren und das Dünnblech von einer Haspel bzw. einer Richteinrichtung her angetrieben zwischen die offenen Klemmflächen des Spannrahmens eingeschoben, wo es nach Vollendung dieses Vorganges erfasst und quer zur Vorschubrichtung gespannt wird. In der weiteren Folge gleitet der Spannrahmen mit dem Dünnblechband in die Ablageposition. Anschließend erfassen Auszugsrollen das Dünnblechband und wickeln es weiter schrittweise ab. Der gelöste Spannrahmen gleitet zur Einleitung des nächsten Bearbeitungsvorganges den Blechrand zwischen sich führend in die Schneidposition zurück. Zum Bearbeiten von Blechtafeln werden diese in der Schneidposition auf die Arbeitsfläche gelegt und von dieser in Höhe des Spannrahmens gehoben. Der aus der Ablageposition in die Schneidposition gleitende Spannrahmen nimmt den Blechrand zwischen seine Klemmflächen, um nach dem vollständigen Zurückgleiten die Blechtafel zu erfassen und zu halten.

Die Vorrichtung zur Realisierung der Verfahren zum Ausschneiden von Blechzuschnitten besteht aus einer an sich bekannten Haspel, in die das zum Coil gewickelte Dünnblech eingelegt wird. Der Haspel folgt eine auch an sich bekannte Richteinrichtung für das abgewickelte Blech. Dieser Richteinrichtung folgt direkt eine Schneidmaschine, die nebeneinander in Vorschubrichtung des Bleches eine Schneidposition und eine Ablageposition hat. Der Schneidmaschine folgen Auszugsrollen und eine das Restblech zerlegende Entsorgung. In der Schneidposition befindet sich ein an sich bekannter, die Arbeitsfläche tragender, mit einer Absaugung versehener Arbeitstisch, der bis zur Arbeitshöhe anhebbar das vom Coil abgewickelte Blech unterstützt bzw. Blechtafeln anhebt. In der Ablageposition befindet sich ein die Ablagefläche tragender, sich entsprechend aufgestapelter Blechzuschnitte absenkender Hubtisch. In Arbeitsbereichshöhe gleitet zwischen Schneidposition und Ablageposition ein Spannrahmen. Die Klemmflächen des Spannrahmens, mit dem die Blechränder erfasst werden, sind durch aufblasbare Schläuche mittels Druckluft gegeneinander bewegbar. Das Querspannen des Bleches erfolgt durch quer zur Bewegungsrichtung des Spannrahmens in einem begrenzten Bereich wirkende Druckluftzylinder. Ein Positionsmessgerät ist dem Spannrahmen zugeordnet. Es ermittelt Abweichungen des Spannrahmens nach seinem Verfahren aus der Schneidposition in die Ablageposition und gibt entsprechende Signale zur entsprechenden Korrektur von der Stellung des Schneidkopfes zum Erreichen der Ist-Position der Blechzuschnitte.

Die Erfindung soll nachstehend anhand eines Ausführungsbeispiels näher erläutert werden. Die zugehörige Zeichnung zeigt den schematischen Aufbau der Vorrichtung zum Ausschneiden von Blechzuschnitten in Seitenansicht.

Die Vorrichtung zum Ausschneiden von Blechzuschnitten besteht aus einer Haspel 1, die ein Coil 2 aus Dünnblech trägt. Der Haspel 1 folgt eine Richteinrichtung 3 für das abgewickelte Blech 4. Dieser Richteinrichtung 3 folgt direkt eine Schneidmaschine 5. Die Schneidmaschine 5 hat nebeneinander in Vorschubrichtung des Bleches 4 eine Schneidposition 6 und eine Ablageposition 7. Der Schneidmaschine 5 folgen das Blech 4 in Längsrichtung spannende und den Blechvorschub bewirkende Auszugsrollen 8 und eine das Restblech 4 zerlegende Entsorgung 9. In der Schneidposition 6 befindet sich ein eine Arbeitsfläche 10 tragender, mit einer nicht dargestellten Absaugung versehener, an das Blech 4 anlegbarer Arbeitstisch 11, der bis zur Arbeitshöhe (durch Pfeil angedeutet) anhebbar das vom Coil 2 abgewickelte Blech 4 unterstützt. In der Ablageposition 7 befindet sich ein die Ablagefläche 12 tragender, sich entsprechend den aufgestapelten Blechzuschnitten absenkender Hubtisch 13 (durch Pfeil angedeutet). In Arbeitsbereichshöhe gleitet zwischen der Schneidposition 6 und der Ablageposition 7, durch den darüber befindlichen Doppelpfeil angedeutet, ein Spannrahmen 14, der vom Blech 4 mitgenommen in die Ablageposition 7 und zurück von einem Mitnehmer am Portal (nicht dargestellt) eines, wie durch den zugehörigen Doppelpfeil angedeutet, zwischen der Schneidposition 6 und der Ablageposition 7 verfahrbaren Schneidkopfes 15 erfasst in die Schneidposition 6 gleitet. Der Spannrahmen 14 trägt Klemmflächen, mit denen die Ränder des Bleches erfaßt werden. Dazu sind die Klemmflächen durch aufblasbare Schläuche mittels Druckluft gegeneinander bewegbar. Das Spannen des Bleches 4 quer zur Vorschubrichtung erfolgt durch in einem begrenzten Bereich wirkende Druckluftzylinder. Ein Positionsmessgerät ist dem Spannrahmen 14 zugeordnet. Es ermittelt Abweichungen des Spannrahmens 14 nach seinem Verfahren aus der Schneidposition 6 in die Ablageposition und gibt entsprechende Signale zur entsprechenden Korrektur der Stellung des Schneidkopfes 15 zum Erreichen der Ist-Position auf den Blechzuschnitten.

### Aufstellung der verwendeten Bezugszeichen

- 1: Haspel
- 2: Coil
- 3: Richteinrichtung
- 4: Blech
- 5: Schneidmaschine
- 6: Schneidposition
- 7: Ablageposition
- 8: Auszugsrolle
- 9: Entsorgung
- 10: Arbeitsfläche
- 11: Arbeitstisch
- 12: Ablagefläche
- 13: Hubtisch
- 14: Spannrahmen
- 15: Schneidkopf

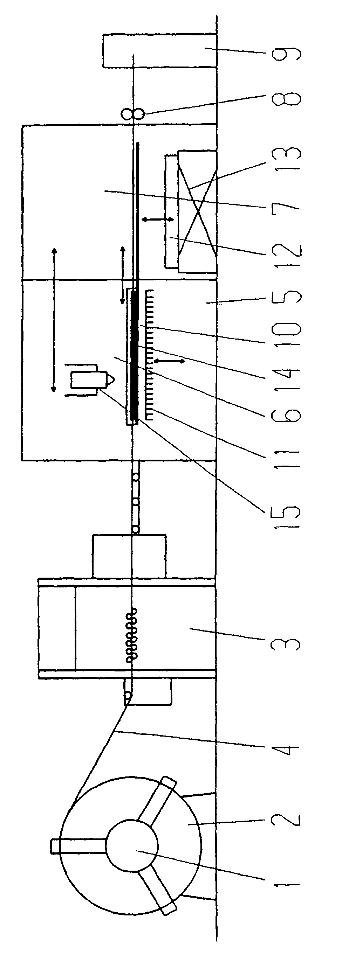

## Patentansprüche

1. Verfahren zum Ausschneiden von Blechzuschnitten, vorzugsweise aus von auf ein Coil gewickelten Dünnblech mit schrittweisen Abwickeln und Ausrichten des Bleches in Längsrichtung der Vorrichtung bzw. mit Einlegen von Blechtafeln auf eine Arbeitsfläche, **dadurch gekennzeichnet, dass** das Blech (4) in einem ersten Arbeitsgang über der Arbeitsfläche (10) von einem seitlichen Spannrahmen (14) erfasst und gespannt in einer Schneidposition (6) hauptsächlich bis auf die Blechzuschnitte im Restblech (4) haltende Stege vorgeschnitten wird, dass das vorgeschnittene Blech (4) weiterhin eingespannt bleibend über eine Ablagefläche (12) in eine Ablageposition (7) verfahren wird, dass dort in einem zweiten Arbeitsgang die Blechzuschnitte durch Zerschneiden der Stege geordnet abgestapelt werden und dass danach das Restblech (4) von der Ablageposition (7) weiter zu einer Entsorgung (9) befördert wird.

2. Verfahren zum Ausschneiden von Blechzuschnitten nach Anspruch 1, **dadurch gekennzeichnet, dass** anfangs das von dem Coil (2) beim ersten Anschnitt abgewickelte Dünnblech (4) zwischen den Klemmflächen des Spannrahmens (14) in Längsrichtung geführt vorgeschoben, danach vom Spannrahmen (14) erfasst, quer zur Vorschubrichtung gespannt wird, wobei unterstützend die Arbeitsfläche (10) an das Blech angelegt wird, und zur Einleitung der nächstfolgenden Arbeitsschritte die gelösten Klemmflächen beim Zurückgleiten des Spannrahmens (14) in die Schneidposition (6) am Blech (4) entlang in die Ausgangsstellung gleiten.

3. Verfahren zum Ausschneiden von Blechzuschnitten nach Anspruch 1, **dadurch gekennzeichnet, dass** Blechtafeln in die Schneidposition (6) der Vorrichtung auf die Arbeitsfläche (10) gelegt und von dieser in Höhe des Spannrahmens (14) gehoben, sich in den aus der Ablageposition (7) zurück gleitenden Spannrahmen (14) einschiebend von diesem erfasst und gehalten werden.

4. Verfahren zum Ausschneiden von Blechzuschnitten nach Anspruch 2, **dadurch gekennzeichnet, dass** das von dem Spannrahmen (14) erfasste und gehaltene Blech (4) nach Ablösen der Arbeitsfläche (10) zusammen mit dem Spannrahmen (14) in die Ablageposition (7) durch das Blechband (4) in Längsrichtung spannende Auszugsrollen (8) verbracht wird..

5. Verfahren zum Ausschneiden von Blechzuschnitten nach Anspruch 1, **dadurch gekennzeichnet, dass** das vorgeschnittene Blech (4) und der/die Schneidköpfe (15) in die Ablageposition (7) verfahren werden und dass dort die Stege mit den die Hauptschnitte ausführenden Schneidköpfen (15) zerschnitten werden.

6. Verfahren zum Ausschneiden von Blechzuschnitten nach Anspruch 5, **dadurch gekennzeichnet, dass** zum Durchtrennen der die Zuschnitte im Blech (4) haltenden und an bezüglich der Maßhaltigkeit des jeweiligen Zuschnitts unkritischen Stellen am Zuschnitt gelegten Stege der Schneidkopf (15) bzw. die Schneidköpfe auf einer Kurvenbahn geführt wird bzw. werden.

7. Verfahren zum Ausschneiden von Blechzuschnitten nach Anspruch 3, **dadurch gekennzeichnet, dass** der Spannrahmen (14) mit dem erfassten Blech (4) sowie der leere Spannrahmen (14) durch mit der Schneidkopfführung gekoppelte Mitnehmer in die Ablageposition (7) bzw. in die Schneidposition (6) gebracht wird.

8. Vorrichtung zur Durchführung des Verfahrens zum Ausschneiden von Blechzuschnitten nach Anspruch 1, die aus einer einen Coil (2) aufnehmenden Haspel (1), einer daran anschließenden Richteinrichtung (3), einer nachfolgenden Schneidmaschine (5) mit Schneidköpfen (15) mit einer Schneidposition (6) und einer Ablageposition (7), nachfolgenden Auszugsrollen (8) und einer abschließenden, das Restblech (4) zerlegenden und aufnehmenden Entsorgung (9) besteht, wobei sich in der Schneidposition (6) ein mit einer Absaugung versehener, die Arbeitsfläche (10) tragender Arbeitstisch (11) befindet, der das vom Coil (2) abgewickelte Blech (4) unterstützt bzw. auf den Blechtafeln in die Vorrichtung legbar sind **dadurch gekennzeichnet, dass**, sich weiter in der Ablageposition (7) ein die Ablagefläche (12) tragender, sich entsprechend der abgelegten Blechzuschnitte absenkender Hubtisch (13) befindet und dass sich in Arbeitsbereichshöhe zwischen der Schneidposition (6) und der Ablageposition (7) verschiebbarer, das Blech (4) greifender, quer zu seiner Bewegungsrichtung in der Vorrichtung spannender und haltender Spannrahmen (14) befindet.

9. Vorrichtung nach Anspruch 8, **dadurch gekennzeichnet, dass** die Klemmflächen des Spannrahmens (14) durch aufblasbare Schläuche mit Druckluft bewegbar und der Spannrahmen (14) durch Druckluftzylinder in einem begrenzten Bereich quer zu seiner Bewegungsrichtung anspannbar ist.

10. Vorrichtung nach Anspruch 8, **dadurch gekennzeichnet, dass** sich in der Ablageposition (7) Blechzuschnitte sammelnde Aufnahmen befinden.

11. Vorrichtung nach Anspruch 8, **dadurch gekennzeichnet, dass** sich in der Ablageposition (7) eine die Blechzuschnitte aus der Schneidmaschine (5) austragende Transporteinrichtung befindet.

12. Vorrichtung nach Anspruch 8, **dadurch gekennzeichnet, daß** beim Zurückfahren des Schneidkopfes (15) aus der Ablageposition (7) in die Schneidposition (6) ein vom Antrieb des Schneidkopfes (15) bewegter Mitnehmer den Spannrahmen (14) ergreift.

13. Vorrichtung nach Anspruch 8, **dadurch gekennzeichnet, daß** bei Bearbeitung von Blechtafeln bei der Verfahrbewegung des Schneidkopfes (15) von der Schneidposition in die Ablageposition (7) ein Mitnehmer den Spannrahmen (14) ergreift.

14. Vorrichtung nach Anspruch 8, **dadurch gekennzeichnet, daß** der Spannrahmen (14) einem Positionsmeßsystem zugeordnet ist, das Abweichungen von der Sollposition ermittelt und entsprechend die Positionssteuerung des/der Schneidkopf/ -köpfe (15) zur Übereinstimmung des Schneidkopfes (15) mit dem Blechzuschnitt nach dem Wechsel von der Schneidposition (6) zur Ablageposition (7) korrigiert.

## Claims

1. Process for cutting out sheet metal blanks, preferably from a thin sheet wound up to a coil, with stepwise unwinding and levelling of the sheet in lengthwise direction of the device, or with feeding metal sheets onto a working surface, respectively, **characterized in that** sheet (4) is seized over working surface (10) in a first working step by a lateral tensioning frame (14) and is pre-cut in clamped condition at a cutting position (6), mainly up to the stabilizing joints holding the blanks in skeleton (4), so that pre-cut sheet (4) remaining clamped is moved over a stacking area (12) into a stacking position (7), that the cut sheet metal blanks are stacked there in a controlled way in a second working step by cutting through the joints, and that the skeleton (4) is then passed forward from stacking position (7) to a place of disposal (9).

2. Process for cutting out sheet metal blanks according to Claim 1, **characterized in that**, first of all, thin sheet (4) unwound from coil (2) at the first cut and guided between the clamping surfaces of tensioning frame (14) is advanced in lengthwise direction, then seized by tensioning frame (14), clamped crosswise to the feeding direction, with working surface (10) being laid on the sheet as support, and, to initiate the subsequent working steps, the released clamping surfaces sliding along sheet (4) into their home position when tensioning frame (14) is sliding back to cutting position (6).

3. Process for cutting out sheet metal blanks according to Claim 1, **characterized in that** metal sheets are laid into cutting position (6) of the device onto working surface (10) and lifted from the latter to the height of tensioning frame (14), moving into tensioning frame (14), which is sliding back from stacking position (7), and are seized and held by said tensioning frame (14).

4. Process for cutting out sheet metal blanks according to Claim 2, **characterized in that** sheet (4) seized and held in position by tensioning frame (14), after working surface (10) is relieved, is moved together with tensioning frame (14) to stacking position (7) by drawing rollers (8), which tension sheet tape (4) in lengthwise direction.

5. Process for cutting out sheet metal blanks according to Claim 1, **characterized in that** pre-cut sheet (4) and cutting head(s) (15) is (are) moved to stacking position (7), and that the joints are cut through at that position by cutting heads (15), which do the main cutting operations.

6. Process for cutting out sheet metal blanks according to Claim 5, **characterized in that**, for cutting through the joints holding the blanks in sheet (4) and located at uncritical positions regarding the accuracy to size of the respective blank, cutting head (15) or the cutting heads, respectively, is or are moved along a curved path.

7. Process for cutting out sheet metal blanks according to Claim 3, **characterized in that** tensioning frame (14) with seized sheet (4) as well as empty tensioning frame (14) is moved into stacking position (7) or into cutting position (6), respectively, by pushers linked with the cutting head guide.

8. Device for carrying out the process for cutting out sheet metal blanks according to Claim 1, consisting of a winder (1) taking up a coil (2), a subsequent levelling unit (3), a subsequent cutting machine (5) with cutting heads (15) with a cutting position (6) and a stacking position (7), subsequent drawing rollers (8) and a final disposal unit (9), which cuts into pieces and takes up skeleton (4), a work table (11) provided with an extraction unit and carrying working surface (10) to support sheet (4) unwound from coil (2) or to be inserted into the device on the sheets, respectively, being located at cutting position (6), **characterized in that** an elevating platform (13) carrying stacking area (12) and lowering according to the deposited sheet metal blanks is further located at stacking position (7), and that a slidable tensioning frame (14) seizing sheet (4), clamping and holding it in position crosswise to its moving direction in the device is located at the working area level between cutting position (6) and stacking position (7).

9. Device according to Claim 8, **characterized in that** the clamping surfaces of tensioning frame (14) can be moved by flexible pipes inflatable by compressed air, and that tensioning frame (14) can be clamped by pneumatic cylinders crosswise to its moving direction within a limited span.

10. Device according to Claim 8, **characterized in that** receiving means to collect sheet metal blanks are located at stacking position (7).

11. Device according to Claim 8, **characterized in that** a conveyor removing the sheet metal blanks from cutting machine (5) is located at stacking position (7).

12. Device according to Claim 8, **characterized in that** a pusher moved by the drive of cutting head (15) seizes tensioning frame (14) when cutting head (15) is withdrawing from stacking position (7) to cutting position (6).

13. Device according to Claim 8, **characterized in that** a driver seizes tensioning frame (14) during the movement of cutting heat (15) from cutting position (6) into stacking position (7), while metal sheets are being processed.

14. Device according to Claim 8, **characterized in that** tensioning frame (14) is assigned to a position measuring system which determines deviations from the set position and correspondingly corrects the position control system of cutting head(s) (15) for agreement of cutting head (15) with the sheet metal blank after the change from cutting position (6) to stacking position (7).

## Revendications

1. Procédé de découpage de flans en tôle dans de la tôle mince enroulée en bobine avec déroulement progressif et planage de la tôle dans le sens longitudinal ou avec pose de plaques de tôle sur une surface de travail et **caractérisé par le fait que** la tôle (4) est, dans une première passe, saisie par dessus la surface de travail (10) par un cadre de serrage (14) et bridée dans une position de découpage (6) principalement avec prédécoupage jusqu'aux languettes retenant le flan dans la tôle résiduelle (4), que, tout en restant bridée, la tôle prédécoupée (4) est amenée en position de dépose (7) au dessus d'une surface de dépose (12), qu'à cet endroit, au cours d'une deuxième passe, les flans sont empilés en bon ordre par découpage des languettes de retenue et que la tôle résiduelle (4) est ensuite évacuée de la position de dépose (7) vers un poste d'élimination des déchets (9).

2. Procédé de découpage de flans en tôle selon la demande de brevet 1 **caractérisé par le fait qu'**au début, lors de la première passe de découpage, la tôle fine (4) déroulée de la bobine (2) est avancée guidée, dans le sens longitudinal, entre les surfaces de serrage du cadres de serrage (14) pour être ensuite saisie par le cadre de serrage (14), bridée transversalement au sens d'avance , la surface de travail (10) étant appliquée à la tôle pour la soutenir et que pour démarrer la passe de travail suivante, les surfaces de serrage relâchée retournent en glissant le long de la tôle (4) lorsque le cadre de serrage (14) se rend en position de découpe(6).

3. Procédé de découpage de flans en tôle selon la demande de brevet 1 **caractérisé par le fait que** la plaque de tôle est déposée dans la position de découpe (6) du dispositif sur la surface de travail (10) et soulevée par celle-ci à hauteur du cadre de serrage (14), s'introduisant dans le cadre de serrage (14) revenant en glissant de la position de dépose (7) pour être saisie et maintenue par celui-ci.

4. Procédé de découpage de flans en tôle selon la demande de brevet 2 **caractérisé par le fait que** la tôle (4) saisie et maintenue par le cadre de serrage (14) est, après son décollage de la surface de travail (10) amenée, solidaire du cadre de serrage (14) en position de dépose (7) par les galets de d'extraction (8) serrant la bande de tôle (4) dans le sens longitudinal.

5. Procédé de découpage de flans en tôle selon la demande de brevet 1 **caractérisé par le fait que** la tôle prédécoupée (4) et la o les tête(s) de découpage (15) sont déplacées en position de dépose (7) et que les languettes y sont découpées à l'aide des têtes de découpage (15) utilisées pour la découpe principale.

6. Procédé de découpage de flans en tôle selon la demande de brevet 5 **caractérisé par le fait que** la tête de découpage (15) ou les têtes de découpage pour le découpage des languettes maintenant le flan dans la tôle (4) et situés à des endroits non critiques pour le respect des cotes du flan respectif est ou sont guidé(s) sur un profil de came.

7. Procédé de découpage de flans en tôle selon la demande de brevet 3 **caractérisé par le fait que** le cadre de serrage (14) avec la tôle (4) saisie ainsi que le cadre (14) vide est amené en position de dépose (7) ou en position de découpe (6) par un entraîneur accouplé au guidage de tête de découpe.

8. Dispositif pour la réalisation du procédé de découpage de flans en tôle selon la demande de brevet 1 composé d'un dévidoir (1) recevant une bobine de feuillard (2), d'un dispositif de planage (3), d'une machine de découpe en aval (5) avec des têtes de découpe (15), une position de découpe (6) et une position de dépose (7), des galets d'extraction en aval (8) et un poste d'élimination en aval (9) découpant et prenant en charge la tôle résiduelle, la table de travail (11) portant la surface de travail (10) et équipée d'un dispositif d'aspiration, se trouvant dans la position de découpe (6), soutenant la tôle 4 déroulée de la bobine (2) ou sur laquelle les plaques de tôle peuvent également être déposées dans le dispositif, **caractérisé par le fait qu'**il y a en outre en position de dépose (7) une table de levage (13) portant la surface de dépose (12) s'abaissant en fonction des flans déposés et que dans la zone de travail, entre la position de découpe (6) et la position de dépose, se trouve un cadre de serrage (14) mobile saisissant la tôle (4), la serrant et la maintenant transversalement à son sens de déplacement dans le dispositif.

9. Dispositif selon la demande de brevet 8 **caractérisé par le fait que** les surfaces de serrage du cadre de serrage (14) peuvent être mues par des tuyaux pneumatiques gonflables et que le cadres de serrage (14) peur être serré par vérin pneumatique transversalement à son sens de déplacement dans une zone limitée.

10. Dispositif selon la demande de brevet 8 **caractérisé par le fait que** la position de dépose (7) comporte des logements collecteurs de flans de tôle.

11. Dispositif selon la demande de brevet 8 **caractérisé par le fait que** la position de dépose (7) comporte un dispositif de transfert évacuant les flans en tôle de la machine de découpage (5).

12. Dispositif selon la demande de brevet 8 **caractérisé par le fait que** lors du retour de la tête de découpe (15) de la position de dépose (7) à la position de découpe (6) un entraîneur mu par la commande de la tête de découpe (15) saisit le cadre de serrage (14).

13. Dispositif selon la demande de brevet 8 **caractérisé par le fait que** lors de l'usinage de plaques de tôle un entraîneur saisit le cadre de serrage (14) lors du mouvement de déplacement de la tête de découpe (15) de la position de découpe (6) à la position de dépose (7).

14. Dispositif selon la demande de brevet 8 **caractérisé par le fait que** le cadre de serrage est asservi par un système de mesure de position qui détermine les écarts par rapport à la position de consigne et, en fonction de ceux-ci, corrige la commande de positionnement de la (des) tête(s) de découpe (15) pour obtenir la concordance de la tête de découpe (15) avec le flan en tôle après le changement de la position de découpe (6) à la position de dépose (7).
